# EUROPEAN PATENT APPLICATION

(11) **EP 4 730 002 A1**
(43) Date of publication of application: **22.04.2026**
(21) Application number: 24822313.3
(22) Date of filing: 14.03.2024
(51) Int. Cl.: G02B 6/14

(54) **PHOTONIC INTEGRATED CIRCUIT CHIP AND SILICON OPTICAL INTEGRATED PLATFORM**

(30) Priority: 16.06.2023 CN 202321536704 U
(71) Applicant: Innolight Technology (Suzhou) Ltd., Suzhou, Jiangsu 215000 (CN)
(72) Inventor: GUO, Defen, Suzhou, Jiangsu 215000 (CN); LI, Xianyao, Suzhou, Jiangsu 215000 (CN)
(74) Representative: Becker, Eberhard
(86) International application number: PCT/CN2024/081607
(87) International publication number: WO 2024/255355

(57) **Abstract**

Provided in the present utility model are a photonic integrated circuit chip and a silicon optical integrated platform. The utility model aims to arrange multiple layers of waveguides in an optical waveguide layer of a photonic integrated circuit chip, the multiple layers of waveguides jointly participate in the spot size conversion of light, so as to reduce the light loss in spot size conversion by a conventional edge coupler provided with a single-layer waveguide. Furthermore, in the thickness direction of a substrate layer, at least one protective layer is arranged on the surface of the side of the photonic integrated circuit chip away from the substrate layer, thereby preventing water vapor from entering silicon dioxide on a surface layer during long-term use, thereby affecting device performance. Moreover, the influence of various kinds of dirt infiltration in the packaging process can be prevented.

## Description

The present disclosure claims the priority benefit of China application serial no. 202321536704.1, filed on June 16, 2023 with the CNIPA, and titled "PHOTONIC INTEGRATED CIRCUIT CHIP AND SILICON OPTICAL INTEGRATED PLATFORM". The entirety of the above-mentioned patent application is hereby incorporated by reference herein and made a part of this specification.

### Technical Field

The present disclosure relates to the field of optical communication technology, and particularly relates to a photonic integrated circuit chip and a silicon optical integrated platform.

### Description of Related Art

In recent years, photonic integrated circuit (PIC) chips have proven effective in reducing the cost and power consumption of optical communication modules, and they represent a critical technology for achieving optical interconnects. A mode field of a typical single-mode silicon waveguide is on the scale of hundreds of nanometers, while a mode field diameter (MFD) of standard single-mode optical fibers, which need to be aligned and coupled with PIC chips (such as silicon photonic chips), is 9-10µm. This results in significant mode field mismatch, leading to a smaller direct coupling alignment tolerance and substantial optical coupling loss. Therefore, specific couplers need to be implemented on the photonic integrated circuit chip to enable efficient coupling with single-mode optical fibers.

In common technologies, waveguide couplers primarily include two types: grating couplers and edge couplers. The advantages of grating couplers include large alignment tolerance, ease of packaging, and the capability for on-chip testing; however, they exhibit low coupling efficiency and have a narrow operational bandwidth. Conversely, edge couplers are characterized by a high coupling efficiency and a wide operational bandwidth.

Furthermore, due to the absence of a passivation protective layer on the surface of the photonic integrated circuit chip, moisture may easily permeate into silicon dioxide on the surface layer during long-term use, which affects the performance of the device. Additionally, the surface of the photonic integrated circuit chip is susceptible to various contaminants during bump and TSV engineering processes and so on.

### SUMMARY

The purpose of the present disclosure is to provide a photonic integrated circuit chip and a silicon optical integrated platform designed to reduce light loss during a spot size conversion process and to enhance an optical coupling efficiency between the photonic integrated circuit chip and external optical fibers. Additionally, the present disclosure aims to prevent the impact of contamination and moisture ingress during the packaging process and in use.

The purpose of the present disclosure is implemented by the following technical solutions:
According to an aspect of the present disclosure, a photonic integrated circuit chip is provided, including: a substrate layer, a dielectric layer, and an optical waveguide layer that are disposed in a stacked manner;
The photonic integrated circuit chip includes an optical device disposed in the optical waveguide layer and a device waveguide optically connected to the optical device. Along a thickness direction perpendicular to the substrate layer, the photonic integrated circuit chip has an external end surface for coupling with the outside;
In a thickness direction of the substrate layer, a first waveguide, a second waveguide and a third waveguide are sequentially disposed in a stacked manner in the optical waveguide layer;
The first waveguide is optically connected to the device waveguide, and an end portion of the first waveguide facing the external end surface is at a first lateral distance from the external end surface;
The second waveguide is optically coupled with the first waveguide, and is spaced apart from the first waveguide in the thickness direction;
The third waveguide is optically coupled with the second waveguide, and is spaced apart from the second waveguide in the thickness direction;
The first waveguide, the second waveguide and the third waveguide all extend in a direction from the interior of the photonic integrated circuit chip toward the external end surface;
The photonic integrated circuit chip further includes at least one protective layer. The at least one protective layer covers a surface at a side of the photonic integrated circuit chip away from the substrate layer, wherein a material of the protective layer is silicon nitride.

In some embodiments, the at least one protective layer covers a surface at a side of the optical waveguide layer away from the substrate layer.

In some embodiments, the optical waveguide layer further includes a conductive circuit layer and metal vias. The conductive circuit layer implements electrical connection between respective conductive circuit layers or other devices through the metal vias. The at least one protective layer directly contacts a surface of a metal layer. The at least one protective layer is provided with a first via that penetrates through the at least one protective layer in the thickness direction to expose the surface of the metal layer, and the first via is filled with a conductive material.

Further, the at least one protective layer includes a first protective layer, a second protective layer and a dielectric layer disposed between the first protective layer and the second protective layer, wherein a material of the dielectric layer is silicon oxide.

Further, in the thickness direction of the substrate layer, partial projections of the first waveguide and the second waveguide overlap each other to couple through adiabatic coupling;
In the thickness direction perpendicular to the substrate layer, an extension length of the second waveguide is greater than an extension length of the third waveguide, and an end portion of the second waveguide close to the external end surface is aligned with an end portion of the third waveguide close to the external end surface.

Further, the second waveguide and the third waveguide are configured for performing a spot size conversion on light coupled from the first waveguide and then transmitting the light to the external optical fiber, or performing the spot size conversion on light input from the external optical fiber, and coupling the light subjected to the spot size conversion to the first waveguide.

Further, the first waveguide and the device waveguide are disposed in the same layer.

Further, in the direction from the interior of the photonic integrated circuit chip toward the external end surface, a portion of the first waveguide has an inverted wedge structure.

Further, in the direction from the interior of the photonic integrated circuit chip toward the external end surface, a portion of the second waveguide has an inverted wedge structure.

Further, in the direction from the interior of the photonic integrated circuit chip toward the external end surface, the third waveguide maintains an constant cross-sectional width.
Further, the quantity of the second waveguides is multiple, and the quantity of the third waveguides is multiple;
At a cross-sectional position close to a plane where the external end surface is located, combinations of the multiple second waveguides and the multiple third waveguides are arranged in multiple rows and/or multiple columns;
At the cross-sectional position close to the plane where the external end surface is located, the multiple second waveguides and the multiple third waveguides are arranged in a staggered arrangement or an irregular arrangement between adjacent rows and/or columns.

Further, in the direction from the interior of the photonic integrated circuit chip toward the external end surface, a cross-sectional width of a portion of at least one second waveguide among the multiple second waveguides gradually decreases toward the direction of the external end surface.

Further, the first waveguide, the second waveguide, and the third waveguide are silicon nitride waveguides or silicon oxynitride waveguides.

Further, in the thickness direction of the substrate layer, the optical waveguide layer further includes:
A fourth waveguide, wherein the fourth waveguide is optically coupled with the third waveguide and is spaced apart from the third waveguide in the thickness. The fourth waveguide extends in the direction from the interior of the photonic integrated circuit chip toward the external end surface.

Further, an extension length of the fourth waveguide is less than or equal to an extension length of the third waveguide. An end portion of the fourth waveguide close to the external end surface is aligned with the end portion of the third waveguide close to the external end surface.

Further, in the direction from the interior of the photonic integrated circuit chip toward the external end surface, the fourth waveguide maintains a constant cross-sectional width.

Further, in a direction from an inner end toward an outer end of the multilayer edge coupler, the fourth waveguide maintains a constant cross-sectional width.
Further, the quantity of the second waveguides is multiple, the quantity of the third waveguides is multiple, the quantity of the fourth waveguides is multiple;
At the cross-sectional position close to the plane where the external end surface is located, combinations of the multiple second waveguides, the multiple third waveguides, and the multiple fourth waveguides are arranged in multiple rows and multiple columns;
The multiple second waveguides, the multiple third waveguides, and the multiple fourth waveguides are arranged in a staggered arrangement or in an irregular arrangement between adjacent rows and/or columns.

Further, the fourth waveguide is a silicon nitride waveguide or a silicon oxynitride waveguide.
According to another aspect of the present disclosure, a silicon optical integrated platform is also provided, including: a photonic integrated circuit chip;
An optical fiber, wherein the optical fiber includes an optical fiber core and an optical fiber cladding covering the optical fiber core;
Wherein, the optical fiber is aligned with the external end surface of the photonic integrated circuit chip to perform optical coupling.

In the present disclosure, multiple layers of waveguides are provided within an optical waveguide layer in a photonic integrated circuit chip (PIC chip), where the multiple layers of waveguides jointly participate in the spot size conversion of light to reduce light loss during the spot size conversion process by a conventional edge coupler having a single-layer waveguide. Moreover, in the thickness direction of the substrate layer, at least one protective layer is disposed on a surface at a side of the photonic integrated circuit chip away from the substrate layer to prevent water vapor from entering silicon dioxide on the surface layer during long-term use, thereby affecting performance of the device. Meanwhile, the influence of various kinds of dirt infiltration in the packaging process may be prevented.

### BRIEF DESCRIPTION OF THE DRAWINGS

In order to more clearly illustrate the technical solutions in the embodiments of the present disclosure, the drawings required for use in the description of the embodiments will be briefly introduced below. Clearly, the drawings in the following description are merely some embodiments of the present disclosure. For those skilled in the art, other implementations may also be obtained according to these drawings without paying creative effort.
FIG. 1 shows a structural diagram of a photonic integrated circuit chip provided by an embodiment of the present disclosure;
FIG. 2A shows a cross-sectional diagram of the photonic integrated circuit chip provided in FIG. 1 at a cross-sectional position A;
FIG. 2B shows a cross-sectional diagram of the photonic integrated circuit chip provided in FIG. 1 at a cross-sectional position B;
FIG. 2C shows a cross-sectional diagram of the photonic integrated circuit chip provided in FIG. 1 at a cross-sectional position C;
FIG. 2D shows a cross-sectional diagram of the photonic integrated circuit chip provided in FIG. 1 at a cross-sectional position D;
FIG. 2E shows a cross-sectional diagram of the photonic integrated circuit chip provided in FIG. 1 at a cross-sectional position E;
FIG. 2F shows a cross-sectional diagram of the photonic integrated circuit chip provided in FIG. 1 at a cross-sectional position F;
FIG. 2G shows a cross-sectional diagram of the photonic integrated circuit chip provided in FIG. 1 at a cross-sectional position G;
FIG. 3 shows a top view structural diagram of multiple second waveguides in FIG. 1 from the cross-sectional position C to the cross-sectional position D;
FIG. 4A shows another cross-sectional diagram of the photonic integrated circuit chip provided in FIG. 1 at the cross-sectional position A;
FIG. 4B shows yet another cross-sectional diagram of the photonic integrated circuit chip provided in FIG. 1 at the cross-sectional position E;
FIG. 4C shows still another cross-sectional diagram of the photonic integrated circuit chip provided in FIG. 1 at the cross-sectional position G;
FIG. 5 shows a structural diagram of a photonic integrated circuit chip provided by another embodiment of the present disclosure;
FIG. 6A shows a cross-sectional diagram of the photonic integrated circuit chip provided in FIG. 5 at the cross-sectional position A;
FIG. 6B shows a cross-sectional diagram of the photonic integrated circuit chip provided in FIG. 5 at the cross-sectional position B;
FIG. 6C shows a cross-sectional diagram of the photonic integrated circuit chip provided in FIG. 5 at the cross-sectional position C;
FIG. 6D shows a cross-sectional diagram of the photonic integrated circuit chip provided in FIG. 5 at the cross-sectional position D;
FIG. 6E shows a cross-sectional diagram of the photonic integrated circuit chip provided in FIG. 5 at the cross-sectional position E;
FIG. 6F shows a cross-sectional diagram of the photonic integrated circuit chip provided in FIG. 5 at the cross-sectional position F;
FIG. 7A shows another cross-sectional diagram of the photonic integrated circuit chip provided in FIG. 5 at the cross-sectional position A;
FIG. 7B shows yet another cross-sectional diagram of the photonic integrated circuit chip provided in FIG. 5 at the cross-sectional position C;
FIG. 7C shows still another cross-sectional diagram of the photonic integrated circuit chip provided in FIG. 5 at the cross-sectional position E;
FIG. 8 shows a structural diagram of a photonic integrated circuit chip provided by still another embodiment of the present disclosure;
FIG. 9 shows a cross-sectional diagram of the photonic integrated circuit chip provided in FIG. 8 at the cross-sectional position A.

### DESCRIPTION OF THE EMBODIMENTS

The above description is only an overview of the technical solution of the present disclosure. In order to more clearly understand the technical means of the present disclosure, it may be implemented according to the content of the specification. In order to make the above and other purposes, features and advantages of the present disclosure more obvious and understandable, preferred embodiments are specifically presented below and described in detail in conjunction with the accompanying drawings as follows.

In the description of the present disclosure, it should be noted that unless otherwise clearly specified and limited, the terms "install", "connect", and "connection" should be understood in a broad sense. For example, the connection may be a fixed connection, a detachable connection, or an integral connection; the connection may be a mechanical connection, an electrical connection, or may communicate with each other; the connection may be a direct connection, or an indirect connection through an intermediate medium, and may be the internal communication of two elements or the interaction relationship between two elements. The meaning of chip herein may include a bare chip. When involving method steps, the sequence illustrated herein represents an exemplary solution, but does not indicate a limitation on the sequence. For those of ordinary skill in the art, the specific meanings of the above terms in the present disclosure may be understood according to specific circumstances.

The term "substrate" used herein may represent a substrate of a diced wafer, or may represent a substrate of an undiced wafer. It should be understood that the term "thin film" includes layers and should not be interpreted as indicating vertical or horizontal thickness unless otherwise specified. It should be noted that the thickness of each material layer of the edge coupler structure shown in the figures is merely schematic and does not represent actual thickness.

In order to make the purpose, features and advantages of the present disclosure more obvious and understandable, the present disclosure will be described in further detail below in conjunction with the accompanying drawings and specific implementation methods.

### Embodiment

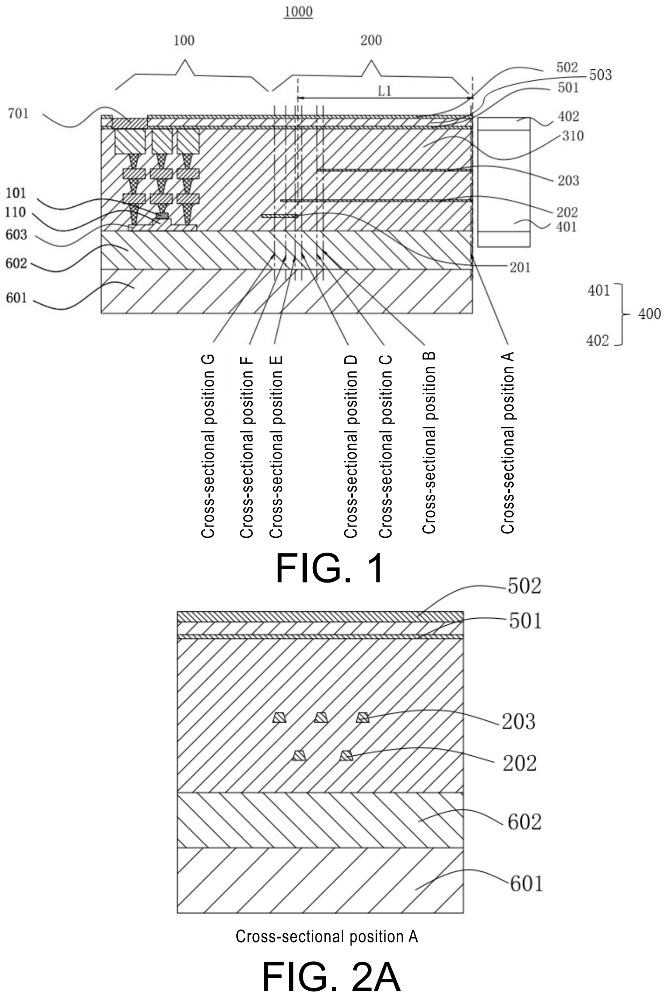

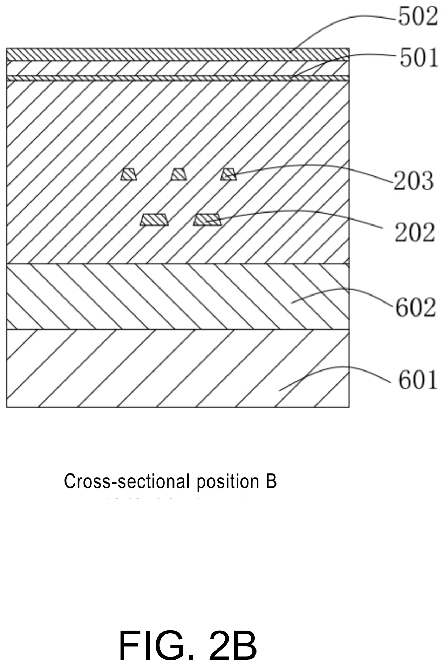

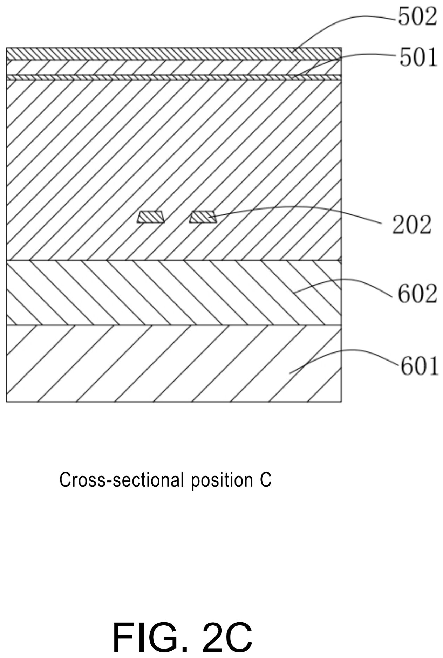

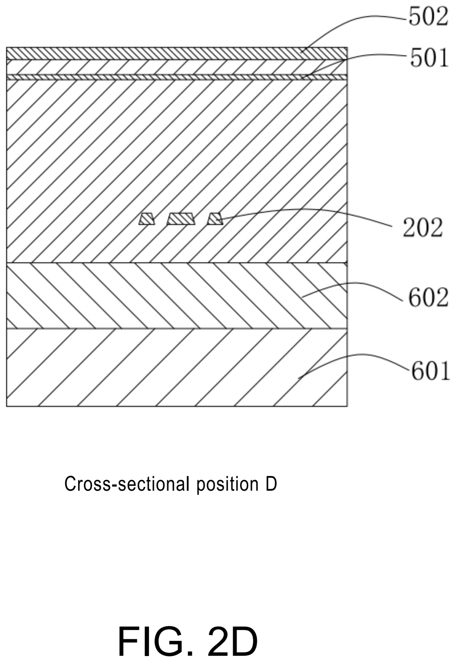

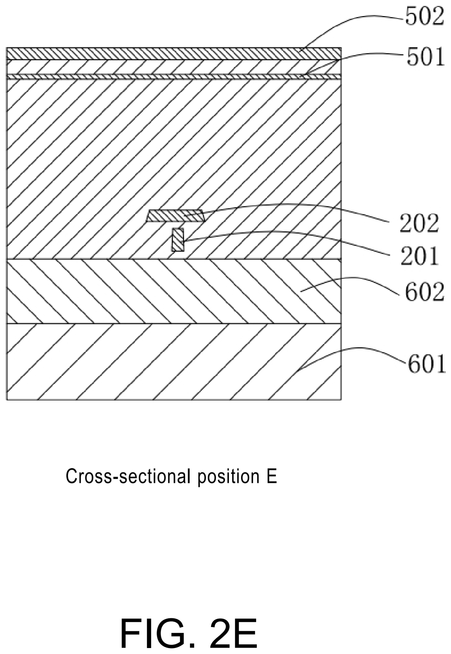

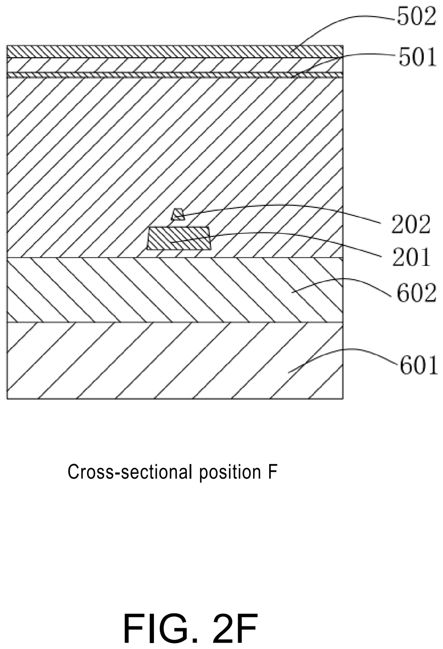

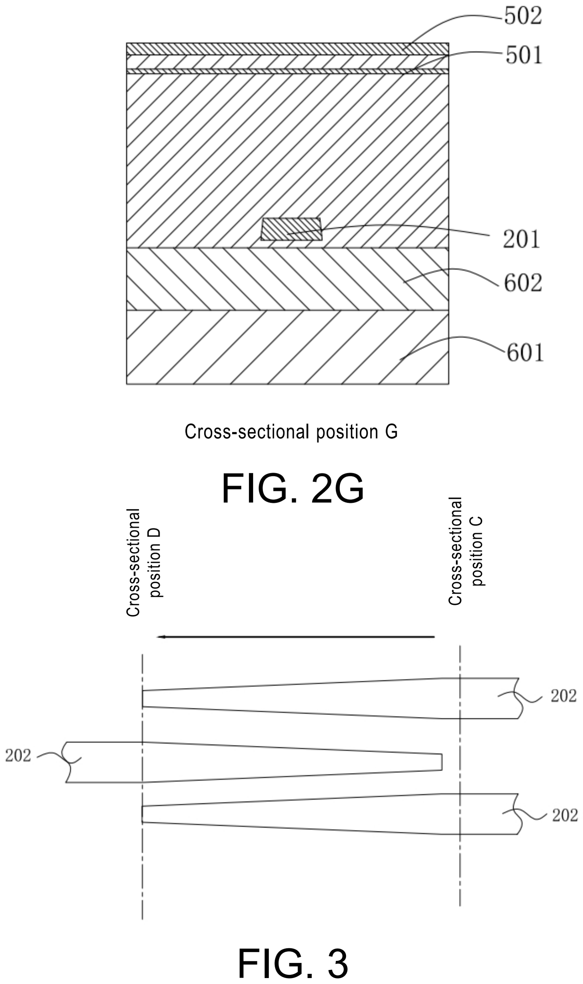

FIG. 1 shows a structural diagram of a photonic integrated circuit chip provided by an embodiment of the present disclosure. FIG. 2A shows a cross-sectional diagram of the photonic integrated circuit chip provided in FIG. 1 at a cross-sectional position A. FIG. 2B shows a cross-sectional diagram of the photonic integrated circuit chip provided in FIG. 1 at a cross-sectional position B. FIG. 2C shows a cross-sectional diagram of the photonic integrated circuit chip provided in FIG. 1 at a cross-sectional position C. FIG. 2D shows a cross-sectional diagram of the photonic integrated circuit chip provided in FIG. 1 at a cross-sectional position D. FIG. 2E shows a cross-sectional diagram of the photonic integrated circuit chip provided in FIG. 1 at a cross-sectional position E. FIG. 2F shows a cross-sectional diagram of the photonic integrated circuit chip provided in FIG. 1 at a cross-sectional position F. FIG. 2G shows a cross-sectional diagram of the photonic integrated circuit chip provided in FIG. 1 at a cross-sectional position G. FIG. 3 shows a top view structural diagram of multiple second waveguides in FIG. 1 from the cross-sectional position C to the cross-sectional position D.

As shown in FIG. 1 and FIG. 2A to FIG. 2G, a photonic integrated circuit chip 1000 provided in Embodiment 1 of the present disclosure includes: a substrate layer 601, a dielectric layer 602, and an optical waveguide layer 310 arranged in a stacked manner.

The photonic integrated circuit chip 1000 includes a first region 100 and a second region 200 located above the dielectric layer 602 and at least partially located below the stacked optical waveguide layer 310. An optical device 101 and a device waveguide 110 optically connected to the optical device 101 are disposed in the optical waveguide layer 310 of the first region 100. An edge coupler is disposed in the optical waveguide layer 310 of the second region 200. Along a direction perpendicular to the thickness direction of the substrate layer 601, the photonic integrated circuit chip 1000 has an external end surface coupled with the outside.

In a thickness direction of the substrate layer 601, a first waveguide 201, a second waveguide 202, and a third waveguide 203 are sequentially stacked in the optical waveguide layer 310;
The first waveguide 201 is optically connected to the device waveguide 110, and an end portion of the first waveguide 201 facing the external end surface is at a first lateral distance L1 from the external end surface;
The second waveguide 202 is optically coupled to the first waveguide 201 and is spaced apart from the first waveguide 201 in the thickness direction;
The third waveguide 203 is optically coupled to the second waveguide 202 and is spaced apart from the second waveguide 202 in the thickness direction;
The first waveguide 201, the second waveguide 202, and the third waveguide 203 each extend in a direction from the interior of the photonic integrated circuit chip 1000 toward the external end surface in their respective layers;
Wherein, the photonic integrated circuit chip 1000 further includes at least one protective layer 501, the at least one protective layer 501 covers a surface at a side of the photonic integrated circuit chip 1000 away from the substrate layer 601, wherein, a material of the protective layer 501 is silicon nitride.

As can be seen from the above, the embodiments of the present disclosure aim to provide multiple layers of waveguides in the optical waveguide layer in the photonic integrated circuit chip (PIC chip), where the multiple layers of waveguides jointly participate in the spot size conversion of light to reduce the light loss during the spot size conversion process by the conventional single-layer waveguide. Moreover, in the thickness direction of the substrate layer, at least one protective layer is disposed on a surface at a side of the photonic integrated circuit chip away from the substrate layer to prevent water vapor from entering the silicon dioxide on the surface layer during long-term use, thereby affecting the performance of the device. In the meantime, the influence of various kinds of dirt infiltration in the packaging process may be prevented.

Moreover, at the cross-sectional position close to the external end surface of the photonic integrated circuit chip, the multiple layers of waveguides are jointly utilized to confine an optical field to adjust a spot size of the optical field close to an edge of the photonic integrated circuit chip, thereby enabling the spot size of the optical field to match a mode field diameter of an external optical fiber, thereby improving an optical coupling efficiency between the photonic integrated circuit chip and the external optical fiber.

It should be noted that the mode field diameter, converted through a single-layer waveguide, is typically sensitive to the morphologies or dimensions of the waveguide by itself. These may result in the light spot size of the optical field near the edge of the photonic integrated circuit chip being either excessively large or small, which is unfavorable for adjustment; and, by employing multiple layers of waveguides to jointly participate in the conversion of the light spot size of the optical field, it is possible to reduce the sensitivity of the mode field diameter (light spot diameter) of the single-layer waveguide to its own morphologies or dimensions, while ensuring coupling efficiency.

Exemplarily, in this embodiment, the photonic integrated circuit chip 1000 fabricates the device waveguide 110 based on a top silicon 603 of an SOI (Silicon On Insulator) structure. The optical device 101 includes, for example, a light absorption layer (such as a germanium layer), and in the thickness direction of the substrate layer 601, the light absorption layer is disposed on a side of the device waveguide 110 away from the substrate layer 601.

The dielectric layer 602 is, for example, a silicon oxide buried layer.

The optical waveguide layer 310 is, for example, SiO₂. Specifically, SiO₂ film layers are deposited around the first waveguide 201, the second waveguide 202, and the third waveguide 203 to cover the first waveguide 201, the second waveguide 202, and the third waveguide 203, while serving as a supporting platform for the multiple layers of waveguides, thus enabling the first waveguide 201, the second waveguide 202, and the third waveguide 203 to all extend in the direction from the interior of the photonic integrated circuit chip 1000 toward the external end surface.

The terms "first", "second", and "third" herein are intended to distinguish different objects, rather than to sort the objects and limit the quantity of the objects.

Furthermore, the first region 100 and the second region 200 are distributed in a tiled manner on a plane perpendicular to the thickness direction of the substrate layer 601, thereby enabling light to transmit laterally and freely between the photonic integrated circuit chip 1000 and an external optical fiber 400. This lateral tiled arrangement also optimizes the utilization of a surface area of the photonic integrated circuit chip 1000, thereby enhancing an effective utilization rate of the surface area of the photonic integrated circuit chip 1000.

Exemplarily, in this embodiment, the at least one protective layer 501 covers a surface at a side of the optical waveguide layer 310 away from the substrate layer 601.

Exemplarily, in this embodiment, a conductive circuit layer and metal vias are further provided within the optical waveguide layer 310 of the first region 100, and the conductive circuit layer achieves electrical connection between the conductive circuit layers or other devices through the metal vias. The at least one protective layer directly contacts a surface of a metal layer, and a first through hole (not shown in the figure) penetrating through the at least one protective layer 501 in the thickness direction are disposed on the at least one protective layer 501 to expose the surface of the metal layer, and a conductive material 701 is filled in the first through hole (not shown in the figure). Exemplarily, the conductive material 701 is aluminum, and aluminum has a relatively low electrical conductivity.

Exemplarily, in this embodiment, the at least one protective layer includes a first protective layer 501, a second protective layer 502, and a dielectric layer 503 stacked between the first protective layer 501 and the second protective layer 502. A material of the dielectric layer 503 is silicon oxide, and the dielectric layer 503 may serve as a connector between the first protective layer 501 and the second protective layer 502 to increase the overall thickness and strength.

In this embodiment, the second waveguide 202 is configured on one hand to optically couple with the first waveguide 201 to serve as an optical field transition, and on the other hand to form multiple layers of waveguides with the third waveguide 203 to jointly participate in light spot size conversion of light, so as to reduce light loss during the light spot size conversion process by the conventional single-layer waveguide. Specifically, in the thickness direction of the substrate layer 601, partial projections of the first waveguide 201 and the second waveguide 202 overlap each other to couple through adiabatic coupling. In the thickness direction perpendicular to the substrate layer 601, an extension length of the second waveguide 202 is greater than an extension length of the third waveguide 203, and an end portion of the second waveguide 202 close to the external end surface is aligned with an end portion of the third waveguide 203 close to the external end surface.

Exemplarily, in this embodiment, the first waveguide 201, the second waveguide 202, and the third waveguide 203 are silicon nitride waveguides or silicon oxynitride waveguides. Since the silicon material typically has a high refractive index, an actual mode dimension that silicon waveguides may realize is approximately 2-5µm, while silicon nitride or silicon oxynitride has a lower refractive index compared to the silicon material. Therefore, silicon nitride waveguides or silicon oxynitride waveguides enable realization of larger mode dimensions than silicon waveguides. In some embodiments, for ease of processing and fabrication, the first waveguide 201, the second waveguide 202, and the third waveguide 203 are all made of the same material, for example, all made of silicon nitride.

In this embodiment, the second waveguide 202 and the third waveguide 203 are configured to perform the spot size conversion on light coupled from the first waveguide 201 (for example, expanding the spot size of light) and then transmit the light to the external optical fiber, or to perform the spot size conversion on light input from the external optical fiber (for example, contracting the spot size of light) and couple the light subjected to the spot size conversion to the first waveguide 201.

Specifically, the first waveguide 201, the second waveguide 202, and the third waveguide 203 are respectively formed based on patterned etching of the waveguide layer in each layer; and the quantity of the first waveguides 201, the second waveguides 202, and the third waveguides 203 or the spacing in their thickness direction is determined according to the required coupled light spot diameter.

In some embodiments, the first waveguide 201 is disposed in the same layer as the device waveguide 110.

In some embodiments, in the direction from the interior of the photonic integrated circuit chip toward the external end surface, a portion of the first waveguide 201 has an inverted wedge structure, so that light coupled from the device waveguide 110 may gradually expand after being subjected to the spot size conversion performed by the first waveguide 201.

In some embodiments, in the direction from the interior of the photonic integrated circuit chip toward the external end surface, a portion of the second waveguide 202 has an inverted wedge structure, so that light coupled from the first waveguide 201 may gradually expand after being subjected to the spot size conversion performed by the second waveguide 202 and match with the spot size diameter of the external optical fiber.

In some embodiments, in the direction from the interior of the photonic integrated circuit chip toward the external end surface, the third waveguide 203 maintains a constant cross-sectional width, the second waveguide 202 and the third waveguide 203 jointly confine the optical field to adjust the spot size of the optical field close to the edge of the photonic integrated circuit chip 1000, so that the spot size of the optical field may match with the mode field diameter of the external optical fiber, thereby improving the optical coupling efficiency between the photonic integrated circuit chip and the external optical fiber.

Exemplarily, as illustrated in FIG. 1, FIG. 2A to FIG. 2G, the quantity of the second waveguides 202 is 2, and the quantity of the third waveguides 203 is 3. At a cross-sectional position close to the plane where the external end surface is located (for example, at the cross-sectional position A), combinations of 2 second waveguides 202 and 3 third waveguides 203 are arranged in multiple rows and/or multiple columns; wherein, the 2 second waveguides 202 and 3 third waveguides 203 are arranged in a staggered arrangement or in an irregular arrangement between adjacent rows and/or columns.

By employing the method of arranging the multiple second waveguides 202 and the multiple third waveguides 203 in a staggered arrangement, compared to the setting method where the multiple second waveguides 202 and the multiple third waveguides 203 are vertically aligned, not only the requirements for process alignment errors between the second waveguides 202 and the third waveguides 203 are relaxed, facilitating easier manufacturing, but also, by staggering the arrangement of the multiple second waveguides 202 and the multiple third waveguides 203 between adjacent rows and/or columns, the alignment tolerance in a horizontal direction of the edge coupler with the multiple layers of waveguides may be increased.

At the cross-sectional position B, compared to the cross-sectional position A, the cross-sectional dimensions of the multiple second waveguides 202 have changed. Under the circumstances, the cross-sectional dimensions of the multiple second waveguides 202 are relatively large, while the cross-sectional dimensions of the multiple third waveguides 203 maintain constant, and the optical field is mainly confined in the multiple second waveguides 202.

At the cross-sectional position C, only the multiple second waveguides 202 are present.

Exemplarily, as illustrated in FIG. 3, in some embodiments, in the direction from the interior of the photonic integrated circuit chip toward the external end surface, a cross-sectional width of a portion of at least one second waveguide 202 among the multiple second waveguides 202 gradually decreases in the direction close to the external end surface.

Additionally, from the cross-sectional position C close to the end portion of the third waveguide 203 to the cross-sectional position D close to the end portion of the first waveguide 201, the multiple second waveguides 202 are configured to perform in-plane optical coupling within the plane where the multiple second waveguides 202 are located. In the direction from the interior of the photonic integrated circuit chip toward the external end surface, two second waveguides 202 and projection of one second waveguide 202 located between the two second waveguides 202 partially overlap each other to couple by an adiabatic coupling method. Thus, the optical field may be guided from the multiple second waveguides 202 at the cross-sectional position close to the end portion of the third waveguide 203 to the one second waveguide 202 at the cross-sectional position close to the end portion of the first waveguide 201; Conversely, the optical field may be guided from the one second waveguide 202 at the cross-sectional position close to the end portion of the first waveguide 201 to the multiple second waveguides 202 at the cross-sectional position close to the end portion of the third waveguide 203.

Specifically, from the cross-sectional position C to the cross-sectional position D, the optical field is coupled from the two second waveguides 202 into the one second waveguide 202 located between the two second waveguides 202.

At the cross-sectional position E, compared to the cross-sectional position D, both the second waveguide 202 and the first waveguide 201 are present simultaneously. Since the cross-sectional dimension of the second waveguide 202 is relatively large while the cross-sectional dimension of the first waveguide 201 is relatively small, the optical field is mainly confined in the second waveguide 202.

From the cross-sectional position E to the cross-sectional position F, the cross-sectional dimension of the second waveguide 202 gradually decreases, while the cross-sectional dimension of the first waveguide 201 gradually increases, and the optical field is gradually coupled from the second waveguide 202 into the first waveguide 201.

At the cross-sectional position G, only the first waveguide 201 is present.

In some embodiments, in the direction from the interior of the photonic integrated circuit chip toward the external end surface, a portion of the first waveguide 201 has an inverted wedge structure, so that light coupled from the second waveguide 202 may gradually contract after being subjected to the spot size conversion performed by the first waveguide 201.

In some embodiments, in order to improve the optical coupling efficiency between the first waveguide 201 and the device waveguide 110, the first waveguide 201 epitaxially grows in a direction from the external end surface of the photonic integrated circuit chip toward the first region 100.

In some embodiments, the first waveguide 201 may also serve as a transmission waveguide of the device.

### Embodiment

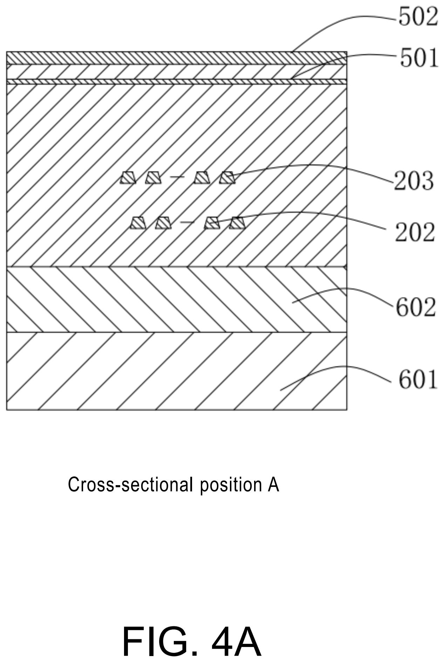

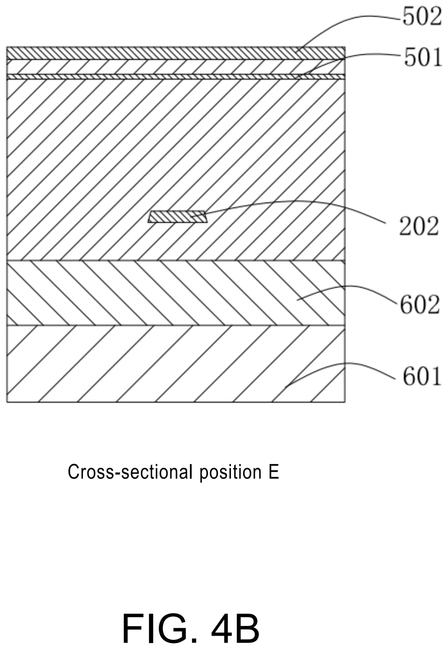

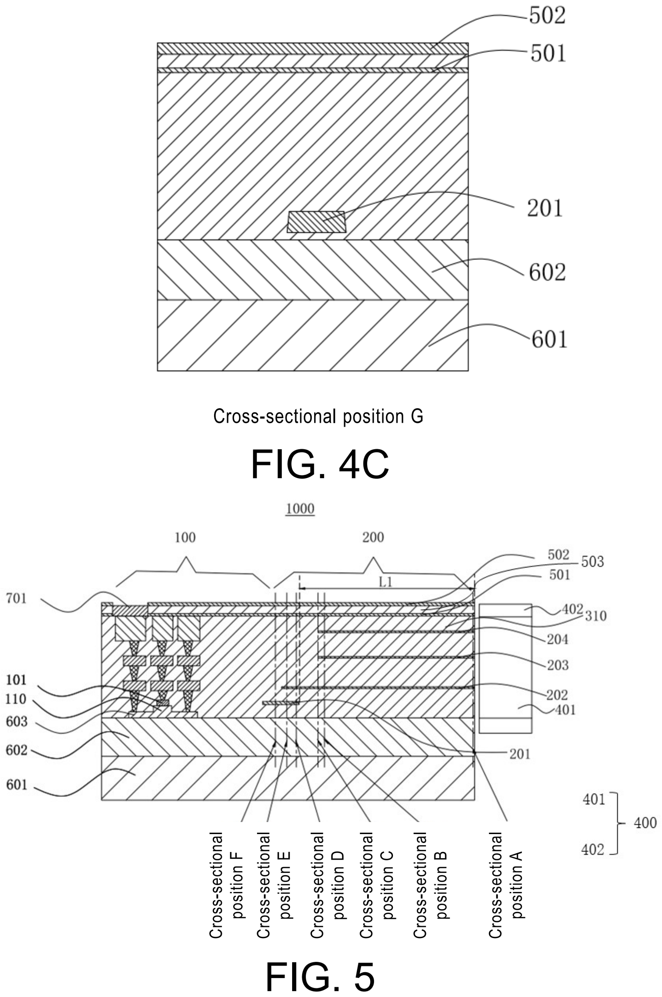

FIG. 4A shows another cross-sectional diagram of the photonic integrated circuit chip provided in FIG. 1 at the cross-sectional position A. FIG. 4B shows yet another cross-sectional diagram of the photonic integrated circuit chip provided in FIG. 1 at the cross-sectional position E. FIG. 4C shows still another cross-sectional diagram of the photonic integrated circuit chip provided in FIG. 1 at the cross-sectional position G.

As shown in FIG. 4A to FIG. 4C, at the cross-sectional position A, compared to Embodiment 1, Embodiment 2 shows that the quantities of the second waveguides 202 and the third waveguides are both greater than 3, such as 4, 5 or more, which is not limited in the embodiments of the present disclosure. The combinations of the multiple second waveguides 202 and the multiple third waveguides 203 are arranged in multiple rows and/or multiple columns; wherein, at the cross-sectional position close to the plane where the external end surface is located, the multiple second waveguides 202 and the multiple third waveguides 203 are arranged in a staggered manner or in an irregular arrangement between adjacent rows and/or columns.

It should be noted that the combinations of the multiple second waveguides 202 and the multiple third waveguides 203 are arranged irregularly, and the optical field corresponding to their arrangements matches the optical field coupled with the external optical fiber.

From the cross-sectional position A to the cross-sectional position E, the multiple third waveguides 203 completely convert the optical field to the one second waveguide 202 through an intermediate adiabatic conversion process, and then from the cross-sectional position E to the cross-sectional position G, the one second waveguide 202 adiabatically converts the optical field to one first waveguide 201.

### Embodiment

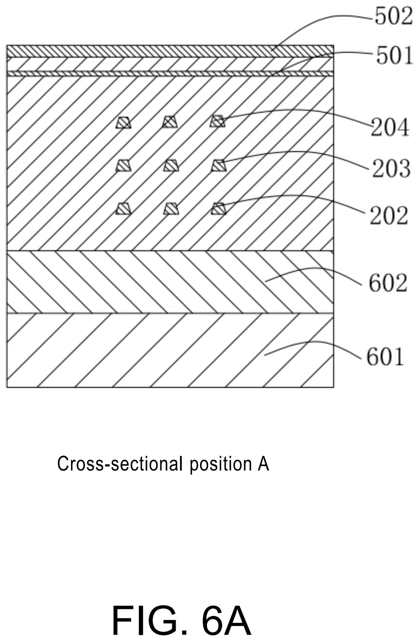

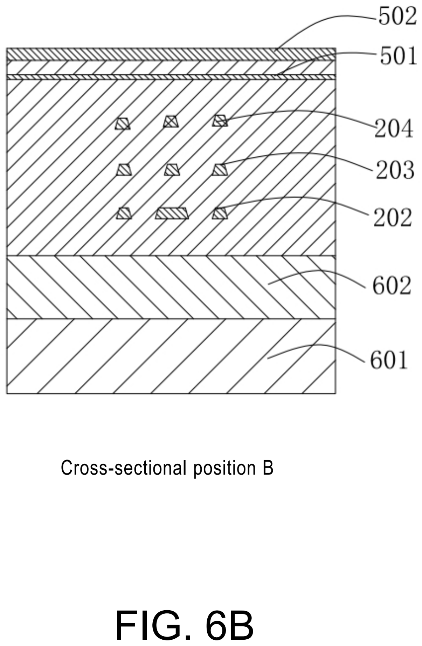

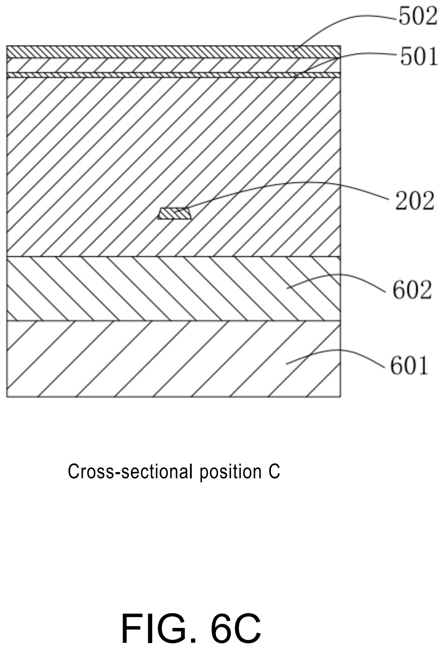

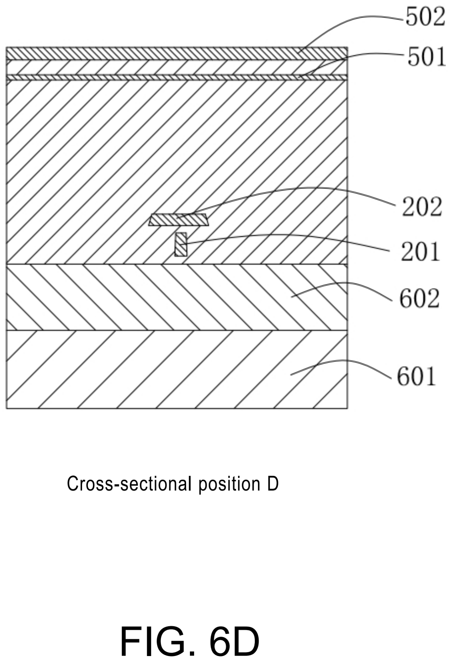

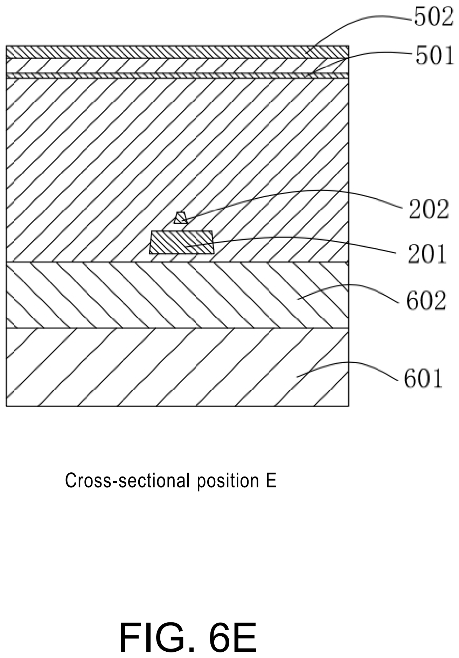

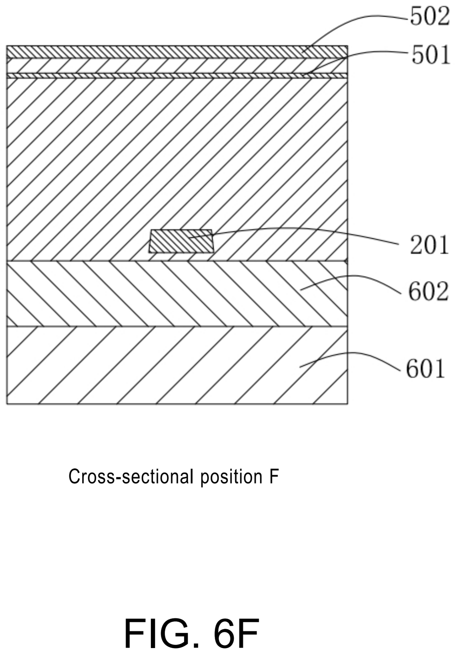

FIG. 5 shows a structural diagram of a photonic integrated circuit chip provided by another embodiment of the present disclosure. FIG. 6A shows a cross-sectional diagram of the photonic integrated circuit chip provided in FIG. 5 at the cross-sectional position A. FIG. 6B shows a cross-sectional diagram of the photonic integrated circuit chip provided in FIG. 5 at the cross-sectional position B. FIG. 6C shows a cross-sectional diagram of the photonic integrated circuit chip provided in FIG. 5 at the cross-sectional position C. FIG. 6D shows a cross-sectional diagram of the photonic integrated circuit chip provided in FIG. 5 at the cross-sectional position D. FIG. 6E shows a cross-sectional diagram of the photonic integrated circuit chip provided in FIG. 5 at the cross-sectional position E. FIG. 6F shows a cross-sectional diagram of the photonic integrated circuit chip provided in FIG. 5 at the cross-sectional position F.

As shown in FIG. 5 and FIG. 6A to FIG. 6F, in this embodiment, compared to Embodiment 1, in the thickness direction of the substrate layer 601, the optical waveguide layer 310 further includes: a fourth waveguide 204. The fourth waveguide 204 is optically coupled with the third waveguide 203. The fourth waveguide 204 extends in the direction from the interior of the photonic integrated circuit chip toward the external end surface; wherein, an extension length of the fourth waveguide 204 is less than or equal to the extension length of the third waveguide 203, and an end portion of the fourth waveguide 204 close to the external end surface is aligned with the end portion of the third waveguide close to the external end surface.

The terms "first", "second", "third" and "fourth" herein are intended to distinguish different objects, rather than to sort the objects and limit the quantity of the objects.

Through the first waveguide, the second waveguide, the third waveguide and the fourth waveguide forming multiple layers of waveguides, the multiple layers of waveguides jointly participate in spot size conversion of light to reduce light loss of the photonic integrated circuit chip during the spot size conversion process. Moreover, at the cross-sectional position close to the external end surface of the photonic integrated circuit chip, the second waveguide, the third waveguide and the fourth waveguide jointly confine the optical field to adjust the spot size of the optical field close to the edge of the photonic integrated circuit chip, enabling the spot size of the optical field to match the mode field diameter of the external optical fiber, thereby improving the optical coupling efficiency between the photonic integrated circuit chip and the external optical fiber.

Exemplarily, in this embodiment, the first waveguide 201, the second waveguide 202, the third waveguide 203 and the fourth waveguide 204 are silicon nitride waveguides or silicon oxynitride waveguides.

In this embodiment, the second waveguide 202, the third waveguide 203 and the fourth waveguide 204 are configured to perform the spot size conversion on light coupled from the first waveguide 201 (for example, expanding the spot size of light) and then transmit the light to the external optical fiber, or to perform the spot size conversion on light input from the external optical fiber (for example, contracting the spot size of light), and couple the light after being subjected to the spot size conversion to the first waveguide 201.

Exemplarily, in this embodiment, in the direction from the interior of the photonic integrated circuit chip toward the external end surface, the fourth waveguide 204 maintains a constant cross-sectional width.

In some embodiments, for ease of processing and fabrication, the first waveguide 201, the second waveguide 202, the third waveguide 203 and the fourth waveguide 204 are all made of the same material, for example, all made of silicon nitride.

Exemplarily, as illustrated in FIG. 5, FIG. 6A to FIG. 6F, the quantity of the second waveguides 202 is multiple, such as 3 or more, and the quantity of the third waveguides 203 is multiple, such as 3 or more. At the cross-sectional position close to the plane where the external end surface is located (for example at the cross-sectional position A), combinations of 3 second waveguides 202 and 3 third waveguides 203 are arranged in multiple rows and/or multiple columns; wherein, the 3 second waveguides 202 and the 3 third waveguides 203 are arranged in an array between adjacent rows and/or columns, and the optical field corresponding to the arrangement matches the optical field coupled with the external optical fiber.

At the cross-sectional position B, compared to the cross-sectional position A, the cross-sectional dimensions of the multiple second waveguides 202 have changed. Under the circumstances, the cross-sectional dimensions of the multiple second waveguides 202 are relatively large, while the cross-sectional dimensions of the multiple third waveguides 203 and the multiple fourth waveguides 204 maintain constant. That is, in this embodiment, in a direction from an inner end toward an outer end of the multilayer edge coupler, the third waveguides 203 and the fourth waveguides 204 maintain invariant cross-sectional widths, and the optical field is mainly confined in the multiple second waveguides 202.

At the cross-sectional position C, only the multiple second waveguides 202 are present.

From the cross-sectional position C close to the end portion of the third waveguide 203 to the cross-sectional position D close to the end portion of the first waveguide 201, the multiple second waveguides 202 are configured to optically couple with the first waveguide 201. Specifically, in the thickness direction of the substrate layer 601, the projections of the end portion of the first waveguide 201 and the end portion of the second waveguide 202 overlap each other to couple through adiabatic coupling.

From the cross-sectional position D to the cross-sectional position E, the cross-sectional dimension of the second waveguide 202 gradually decreases, while the cross-sectional dimension of the first waveguide 201 gradually increases, and the optical field is gradually coupled from the second waveguide 202 into the first waveguide 201.

At the cross-sectional position F, only the first waveguide 201 is present.

### Embodiment

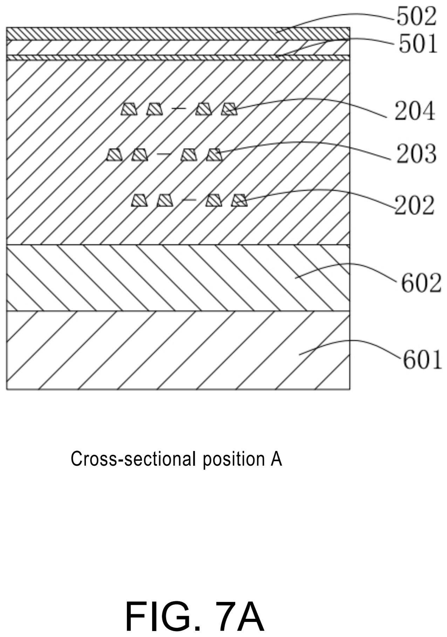

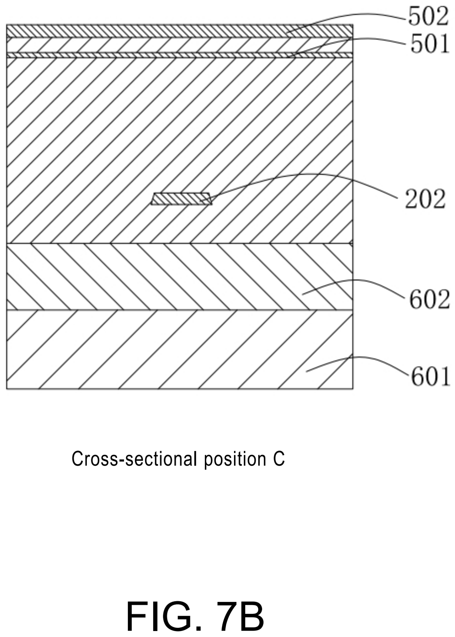

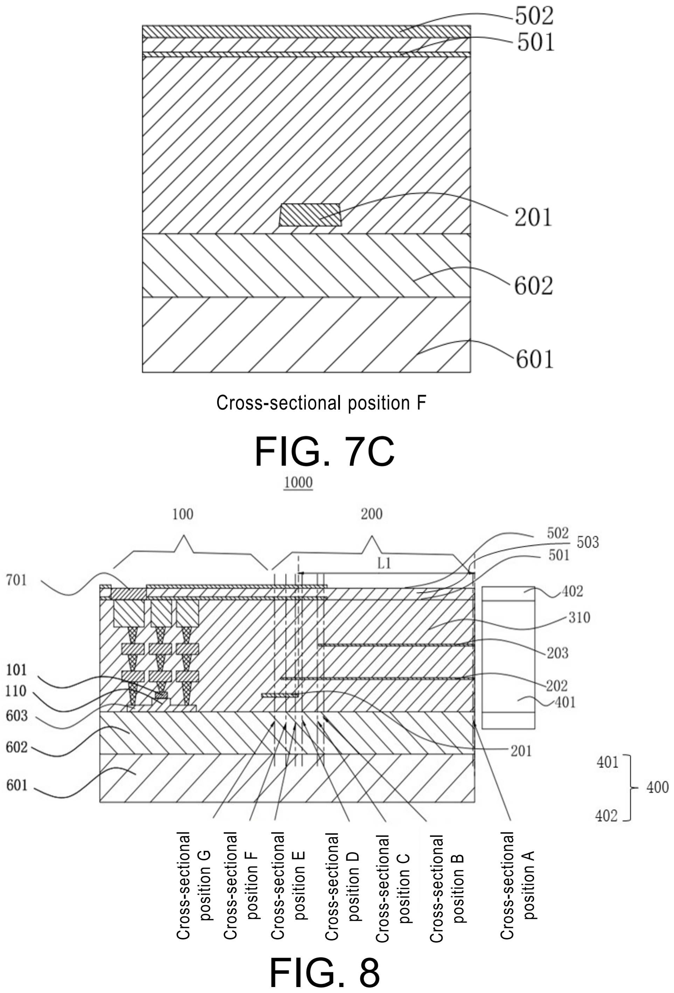

FIG. 7A shows another cross-sectional diagram of the photonic integrated circuit chip provided in FIG. 5 at the cross-sectional position A. FIG. 7B shows yet another cross-sectional diagram of the photonic integrated circuit chip provided in FIG. 5 at the cross-sectional position C. FIG. 7C shows still another cross-sectional diagram of the photonic integrated circuit chip provided in FIG. 5 at the cross-sectional position E.

As shown in FIG. 7A to FIG. 7C, at the cross-sectional position A, compared to Embodiment 3, Embodiment 4 shows that at the cross-sectional position close to the plane where the external end surface is located, the combinations of the multiple second waveguides 202 and the multiple third waveguides 203 are arranged in multiple rows and/or multiple columns; wherein, the multiple second waveguides 202 and the multiple third waveguides 203 are arranged in a staggered manner between adjacent rows and/or columns.

In some other embodiments, the combinations of the multiple second waveguides 202 and the multiple third waveguides 203 may also be arranged irregularly, that is, the multiple second waveguides are arranged freely within the plane where the multiple second waveguides are located, and the multiple third waveguides are arranged freely within the plane where the multiple third waveguides are located. The optical field corresponding to their arrangement matches the optical field coupled with the external optical fiber.

From the cross-sectional position A to the cross-sectional position C, the multiple third waveguides 203 and the multiple fourth waveguides 204 completely convert the optical field into one second waveguide 202 through an intermediate adiabatic conversion process, and then from the cross-sectional position C to the cross-sectional position E, the one second waveguide 202 adiabatically converts the optical field into one first waveguide 201.

### Embodiment

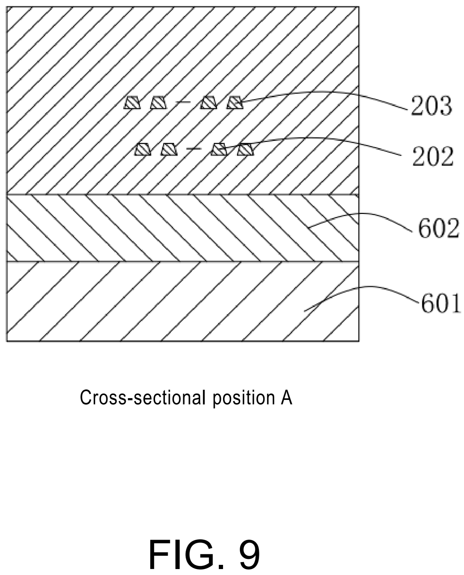

FIG. 8 shows a structural diagram of a photonic integrated circuit chip provided by still another embodiment of the present disclosure. FIG. 9 shows a cross-sectional diagram of the photonic integrated circuit chip provided in FIG. 8 at the cross-sectional position A.

As shown in FIG. 8, in the present embodiment, compared to Embodiment 1, the at least one protective layer covers a surface at a side of the at least one functional layer away from the substrate layer 601 without completely covering an area above the second region 200 of the photonic integrated circuit chip 1000. For example, as shown in FIG. 9, at the cross-sectional position A, the at least one protective layer is not disposed on a side of the optical waveguide layer 310 away from the substrate layer 601, which is applicable to situations where water vapor has less influence.

Continuing to refer to FIG. 1, FIG. 5, and FIG. 8, according to another aspect of the present disclosure, a silicon optical integrated platform is also provided, including the photonic integrated circuit chip 1000 according to any of the aforementioned embodiments; an optical fiber 400, wherein the optical fiber 400 includes an optical fiber core 401 and an optical fiber cladding 402 covering the optical fiber core 401; wherein the optical fiber 400 is aligned with the external end surface of the photonic integrated circuit chip 1000 to perform optical coupling.

The embodiments of the present disclosure aim to provide multiple layers of waveguides within the optical waveguide layer on the photonic integrated circuit chip, wherein the multiple layers of waveguides jointly participate in the spot size conversion of light, so as to reduce light loss during the spot size conversion process by the conventional edge coupler having the single-layer waveguide. Moreover, in the thickness direction of the substrate layer, at least one protective layer is disposed on a surface at a side of the photonic integrated circuit chip away from the substrate layer, so as to prevent water vapor from entering into the silicon dioxide on the surface layer during long-term use, thereby affecting the performance of the device. Meanwhile, the influence of various kinds of dirt infiltration in the packaging process may be prevented.

The above are merely preferred embodiments of the present disclosure, and are not intended to limit the scope of embodiments of the present disclosure. All equivalent changes and modifications made according to the shape, structure, features and spirit described in the scope of the claims of the present disclosure should be included within the scope of the claims of the present disclosure.

## Claims

1. A photonic integrated circuit chip, **characterized in** comprising: a substrate layer, a dielectric layer, and an optical waveguide layer that are disposed in a stacked manner;
wherein the photonic integrated circuit chip comprises an optical device disposed in the optical waveguide layer and a device waveguide optically connected to the optical device, along a direction perpendicular to a thickness direction of the substrate layer, the photonic integrated circuit chip has an external end surface for coupling with the outside;
in a thickness direction of the substrate layer, a first waveguide, a second waveguide and a third waveguide are sequentially disposed in a stacked manner in the optical waveguide layer:
the first waveguide is optically connected to the device waveguide, and an end portion of the first waveguide facing the external end surface is at a first lateral distance from the external end surface;
the second waveguide is optically coupled with the first waveguide, and is spaced apart from the first waveguide in the thickness direction;
the third waveguide is optically coupled with the second waveguide, and is spaced apart from the second waveguide in the thickness direction;
the first waveguide, the second waveguide and the third waveguide all extend in a direction from an interior of the photonic integrated circuit chip toward the external end surface;
wherein the photonic integrated circuit chip further comprises at least one protective layer, the at least one protective layer covers a surface at a side of the photonic integrated circuit chip away from the substrate layer, wherein a material of the protective layer is silicon nitride.

2. The photonic integrated circuit chip according to claim 1, **characterized in that**,
the at least one protective layer covers a surface at a side of the optical waveguide layer away from the substrate layer.

3. The photonic integrated circuit chip according to claim 1, **characterized in that**, the optical waveguide layer further comprises a conductive circuit layer and metal vias, the conductive circuit layer implements electrical connection between respective conductive circuit layers or other devices through the metal vias;
the at least one protective layer directly contacts a surface of the metal layer, the at least one protective layer is provided with a first via that penetrates through the at least one protective layer in the thickness direction to expose the surface of the metal layer, and the first via is filled with a conductive material.

4. The photonic integrated circuit chip according to claim 1, **characterized in that**,
the at least one protective layer comprises a first protective layer, a second protective layer and a dielectric layer disposed between the first protective layer and the second protective layer, wherein a material of the dielectric layer is silicon oxide.

5. The photonic integrated circuit chip according to claim 1, **characterized in that**,
in the thickness direction of the substrate layer, partial projections of the first waveguide and the second waveguide overlap each other to couple through adiabatic coupling;
in the thickness direction perpendicular to the substrate layer, an extension length of the second waveguide is greater than an extension length of the third waveguide, and an end portion of the second waveguide close to the external end surface is aligned with an end portion of the third waveguide close to the external end surface.

6. The photonic integrated circuit chip according to claim 5, **characterized in that**,
the second waveguide and the third waveguide are configured for performing a spot size conversion on light coupled from the first waveguide and then transmitting the light to an external optical fiber, or performing the spot size conversion on light input from the external optical fiber, and coupling the light subjected to the spot size conversion to the first waveguide.

7. The photonic integrated circuit chip according to claim 1, **characterized in that**,
the first waveguide and the device waveguide are disposed in a same layer.

8. The photonic integrated circuit chip according to claim 1, **characterized in that**,
in the direction from the interior of the photonic integrated circuit chip toward the external end surface, a portion of the first waveguide has an inverted wedge structure.

9. The photonic integrated circuit chip according to claim 1, **characterized in that**,
in the direction from the interior of the photonic integrated circuit chip toward the external end surface, a portion of the second waveguide has an inverted wedge structure.

10. The photonic integrated circuit chip according to claim 1, **characterized in that**,
in the direction from the interior of the photonic integrated circuit chip toward the external end surface, the third waveguide maintains a constant cross-sectional width.

11. The photonic integrated circuit chip according to claim 6, **characterized in that**,
a quantity of the second waveguides is multiple, and a quantity of the third waveguides is multiple;
at a cross-sectional position close to a plane where the external end surface is located, combinations of the multiple second waveguides and the multiple third waveguides are arranged in multiple rows and/or multiple columns;
wherein at the cross-sectional position close to the plane where the external end surface is located, the multiple second waveguides and the multiple third waveguides are arranged in a staggered arrangement or an irregular arrangement between the adjacent rows and/or columns.

12. The photonic integrated circuit chip according to claim 11, **characterized in that**,
in the direction from the interior of the photonic integrated circuit chip toward the external end surface, a cross-sectional width of a portion of at least one second waveguide among the multiple second waveguides gradually decreases toward a direction of the external end surface.

13. The photonic integrated circuit chip according to claim 1, **characterized in that**,
the first waveguide, the second waveguide, and the third waveguide are silicon nitride waveguides or silicon oxynitride waveguides.

14. The photonic integrated circuit chip according to claim 1, **characterized in that**, in the thickness direction of the substrate layer, the optical waveguide layer further comprises:
a fourth waveguide, wherein the fourth waveguide is optically coupled with the third waveguide and is spaced apart from the third waveguide in the thickness, the fourth waveguide extends in the direction from the interior of the photonic integrated circuit chip toward the external end surface.

15. The photonic integrated circuit chip according to claim 14, **characterized in that**,
an extension length of the fourth waveguide is less than or equal to an extension length of the third waveguide, an end portion of the fourth waveguide close to the external end surface is aligned with an end portion of the third waveguide close to the external end surface.

16. The photonic integrated circuit chip according to claim 15, **characterized in that**,
in the direction from the interior of the photonic integrated circuit chip toward the external end surface, the fourth waveguide maintains a constant cross-sectional width.

17. The photonic integrated circuit chip according to claim 14, **characterized in that**,
a quantity of the second waveguides is multiple, a quantity of the third waveguides is multiple, a quantity of the fourth waveguides is multiple;
at a cross-sectional position close to a plane where the external end surface is located, combinations of the multiple second waveguides, the multiple third waveguides, and the multiple fourth waveguides are arranged in multiple rows and multiple columns;
the multiple second waveguides, the multiple third waveguides, and the multiple fourth waveguides are arranged in a staggered arrangement or in an irregular arrangement between the adjacent rows and/or columns.

18. The photonic integrated circuit chip according to claim 14, **characterized in that**, the fourth waveguide is a silicon nitride waveguide or a silicon oxynitride waveguide.

19. A silicon optical integrated platform, **characterized in** comprising the photonic integrated circuit chip according to any one of claims 1 to 18;
an optical fiber, wherein the optical fiber comprises an optical fiber core and an optical fiber cladding covering the optical fiber core;
wherein the optical fiber is aligned with the external end surface of the photonic integrated circuit chip to perform optical coupling.
